# EUROPEAN PATENT SPECIFICATION

(11) **EP 2 715 985 B1**
(45) Date of publication and mention of the grant of the patent: **18.09.2019**
(21) Application number: 12793283.8
(22) Date of filing: 24.05.2012
(51) Int. Cl.: H04L 12/10, H04L 12/28

(54) **SYSTEMS AND METHODS FOR POWERING A NETWORK ACCESS DEVICE USING CUSTOMER PREMISES EQUIPMENT**
SYSTEME UND VERFAHREN ZUR ANSTEUERUNG EINER NETZWERKZUGANGSVORRICHTUNG MIT NUTZUNG DER EINRICHTUNG AN EINEM KUNDENSTANDORT
SYSTÈMES ET PROCÉDÉS D'ALIMENTATION D'UN DISPOSITIF D'ACCÈS AU RÉSEAU À L'AIDE D'UN ÉQUIPEMENT DES LOCAUX D'ABONNÉ

(30) Priority: 27.05.2011 US 201113117918
(43) Date of publication of application: 09.04.2014
(73) Proprietor: Adtran, Inc., Huntsville, AL 35806 (US)
(72) Inventor: SMITH, Brian, Madison, AL 35758 (US); JOFFE, Daniel, M., Owens Crossroads, AL 35763 (US)
(74) Representative: Jaeger, Michael David
(86) International application number: PCT/US2012/039354
(87) International publication number: WO 2012/166518

(56) References cited:
- US-A1- 2006 203 997
- US-B1- 6 385 234
- US-B2- 7 209 804
- James Blanc, Pedestal Network Inc.: "Line Powering in the remote DSLAM World", Internet Article Internet Article, 7 December 2004 (2004-12-07), pages 1-8, XP002730898, Internet Retrieved from the Internet: URL:http://www.eetimes.com/document.asp?do c_id=1272054 [retrieved on 2014-10-09]

## Description

### RELATED ART

Network access devices (NADs), such as, for example, digital subscriber line access multiplexers (DSLAMs), are often used in communication systems for multiplexing and or switching signals for transmission between a network facility, such as a central office, and customer premises equipment (CPE) located at one or more customer premises (CP). Such NADs are sometimes located at an intermediate point between the network facility and the CP in an outside plant environment. Typical outside plant environments include locations such as manholes, handholes, and telephone poles.

When the NAD is located in such an outside plant environment, the NAD may have a battery for powering the components of the NAD. However, such a battery must be replaced from time-to-time thereby increasing maintenance costs and burdens for the network service provider.

US patent publication US2006/0203997 discloses a system for supplying power in a communication network including a network element and a plurality of subscriber devices in communication with the network element.

### BRIEF DESCRIPTION OF THE DRAWINGS

The present disclosure can be better understood with reference to the following drawings. The elements of the drawings are not necessarily to scale relative to each other, emphasis instead being placed upon clearly illustrating the principles of the disclosure. Furthermore, like reference numerals designate corresponding parts throughout the several views.
FIG. 1 is a block diagram depicting an exemplary embodiment of a communication system.
FIG. 2 is a block diagram depicting an exemplary embodiment of an NAD, such as is depicted by FIG. 1.
FIG. 3 is a block diagram depicting an exemplary embodiment of a power management unit, such as is depicted by FIG. 2.
FIG. 4 is a block diagram depicting an exemplary embodiment of a power detection element, such as is depicted by FIG. 3.
FIG. 5 depicts an exemplary embodiment of instruction execution apparatus for implementing power detection logic, such as is depicted by FIG. 4.
FIG. 6 is a flowchart illustrating an exemplary method of determining whether to enable a transceiver of an NAD, such as is depicted by FIG. 2.
FIG. 7 is a block diagram depicting an exemplary embodiment of a power management unit, such as is depicted by FIG. 2.

### DETAILED DESCRIPTION

Embodiments of the present disclosure generally pertain to system of claim 1 and method of claim 5 for powering a network access device (NAD) using customer premises equipment (CPE). A system in accordance with an exemplary embodiment of the present disclosure comprises an NAD positioned at an intermediate point between a network facility and one or more customer premises (CP). The NAD is coupled to CP transceivers located at the one or more customer premises via a plurality of subscriber lines. The CP transceivers are configured to provide power to and also communicate with the NAD via the subscriber lines. The NAD is further configured to form a power signal based on the power received from multiple subscriber lines and to provide the power signal to components of the NAD. The NAD is further configured to determine from which of the subscriber lines it is receiving at least a certain amount of power and to selectively enable and disable the communication service provided over each respective subscriber line based on such determination. The NAD also powers down components of the NAD that were previously used to provide the services that have since been disabled.

The invention is carried out according to the appended independent claims. Optional features of the invention are carried out according to the dependent claims. However, technical descriptions of apparatus, products and/or methods in the description and/or drawings which are not covered by the claims are presented not as embodiments of the invention but as background art or examples useful for understanding the invention.

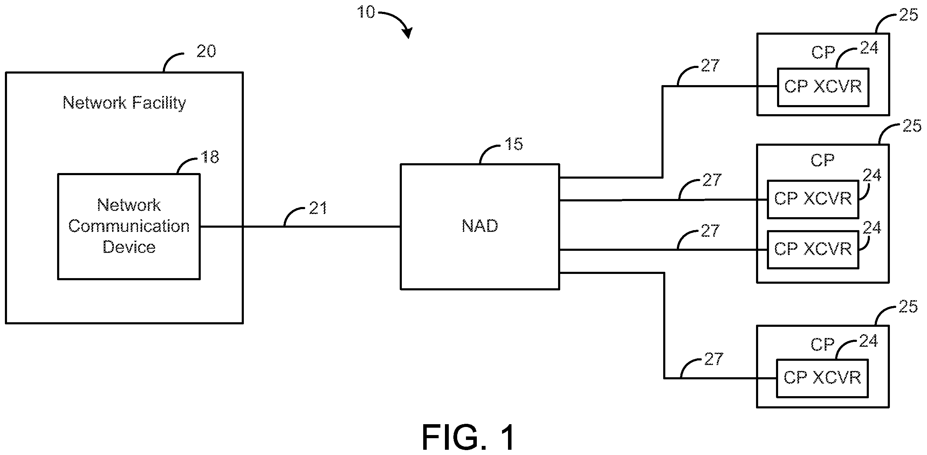

FIG. 1 depicts an exemplary communication system 10. In one embodiment, the communication system 10 comprises an NAD 15 positioned at an intermediate point between a network communication device 18 located at a network facility 20 and at least one CP transceiver (XCVR) 24 located at one or more customer premises 25, The NAD 15 is located in an outside plant environment, such as, for example, in a manhole, in a handhole, or on a telephone pole, and has an environmentally hardened housing (not shown) for protecting components (not shown in FIG. 1) of the NAD 15 within the housing. When the NAD 15 is located in such environment, the NAD 15 is relatively difficult for network service technicians to access in order to perform maintenance. For example, if the NAD 15 is powered by a local power source, such as a battery (not shown), a network service technician must travel to the outside plant environment from time-to-time and locate the NAD 15 in order to replace the battery and maintain proper operation of the NAD 15. Such maintenance would be burdensome and costly for a network service provider.

The NAD 15 is coupled to the network communication device 18 via a network connection 21 and is coupled to the CP transceivers 24 via a plurality of subscriber lines 27, such as twisted-wire pairs. The NAD 15 is configured to receive at least one data signal from the network communication device 18 via the network connection 21 and to transmit data from such data signal across the subscriber lines 27 in order to provide communication services to the CP transceivers 24. The NAD 15 is further configured to receive data signals from the CP transceivers 24 via the subscriber lines 27 and transmit the data from such signals across the network connection 21 to the network communication device 18.

In one embodiment, the NAD 15 uses digital subscriber line (DSL) modulation formats, such as asymmetric DSL (ADSL), high-bit-rate DSL (HDSL), or very-high-bit-rate DSL (VDSL), for the communication occurring across the subscriber lines 27. Other modulation formats and types of NADs 15, such as switches, are possible in other embodiments.

The network connection 21 facilitates transmission of data signals between the network communication device 18 and the NAD 15. In one embodiment, the network connection 21 comprises at least one twisted-wire pair, and DSL modulation formats are used for the data signals carried by the network connection 21. However, in other embodiments, the network connection 21 may comprise an optical fiber carrying high-speed optical signals to and from the NAD 15. In yet other embodiments, the network connection 21 comprises a plurality of connections bonded to form a high-speed data channel. Other network connections 21 and communication connections are possible in other embodiments. For illustrative purposes, it will be assumed hereafter that the network connection 21 comprises an optical fiber unless otherwise indicated, but it should be emphasized that other types of connections are possible in other embodiments.

In one embodiment, each CP transceiver 24 provides power to the NAD 15 via its respective subscriber line 27. In this regard, each CP transceiver 24 transmits to the NAD 15 a power signal across the respective subscriber line 27 coupled to it. The power signal transmitted across a given subscriber line 27 is separated in frequency from the data signal carried by the subscriber line 27 to prevent the power circuitry from interfering with the data signal. As an example, the power signal is transmitted at a lower frequency than the data signals transmitted across the subscriber line 27. The NAD 15 is further configured to combine the power signals received from multiple subscriber lines 27 in order to form an aggregated power signal that is used to provide electrical power to components (not shown in FIG. 1) of the NAD 15, as will be described in more detail hereafter. Furthermore, the NAD 15 is configured to determine from which subscriber lines 27 it is receiving a power signal and to selectively enable and disable communication services based upon such determination. For example, if the CP transceiver 24 coupled to a given subscriber line 27 is not providing power to the NAD 15 via such subscriber line 27, the NAD 15 disables communication service to the CP transceiver 24. However, if the CP transceiver 24 is providing at least a certain level of power to the NAD 15, the NAD 15 enables communication service to the CP transceiver 24. Thus, each CP transceiver 24 is permitted to communicate with the NAD 15 via its respective subscriber line 27 only if it is providing a desired amount of power across such subscriber line 27 to the NAD 15. That is, the NAD 15 requires each CP transceiver 24 to provide a certain amount of electrical power across the subscriber line 27 coupled to it before allowing it to communicate with the NAD 15, Exemplary methods for determining whether each CP transceiver 24 is providing an adequate amount of power will be discussed in more detail hereafter.

Further in disabling communication service to a CP transceiver 24, as described above, the NAD 15 removes power from at least some components, such as the transceiver 40 at the other end of the subscriber line 27, used to communicate with the CP transceiver 24, thereby reducing the power requirements of the NAD 15. Such a feature helps to prevent the NAD 15 from reaching a state of insufficient power due to a number of CP transceivers 24 becoming inactive or other condition in which the NAD 15 stops receiving power from a number of CP transceivers 24.

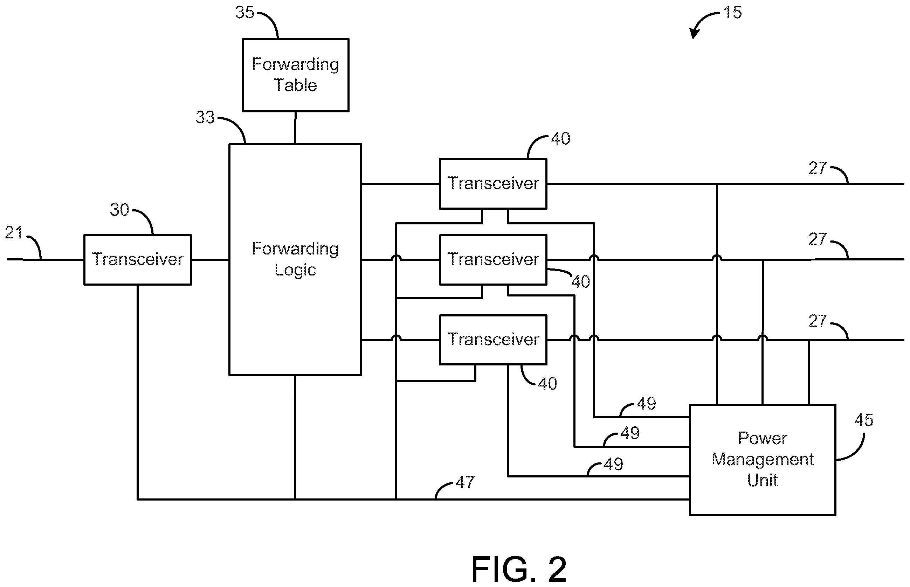

FIG. 2 depicts an exemplary embodiment of the NAD 15 of FIG. 1. In one embodiment, the NAD 15 comprises at least one transceiver 30 coupled to the network connection 21. The transceiver 30 is configured to receive a data signal from the network communication device 18 via the network connection 21 and to demodulate the data signal to recover data packets carried by such signal. The transceiver 30 also transmits the data packets to forwarding logic 33.

The forwarding logic 33 is coupled between the transceiver 30 and a plurality of transceivers 40. The forwarding logic 33 is configured to receive data packets from the transceiver 30 and forward each such data packet to the appropriate transceiver 40 or transceiver 40 based on a forwarding table 35. The forwarding table 35 maps packet header information to ports of the NAD 15. In one embodiment, the forwarding logic 33 receives a data packet from the transceiver 30, identifies at least one parameter (*e.g*. address or tag) in a header of the packet, looks up the parameter in the forwarding table 35, and forwards the packet to the appropriate transceiver 40 such that the packet is transmitted from a port mapped to the parameter by the forwarding table 35. However, other methods of forwarding the data packets to the appropriate transceivers 40 are possible in other embodiments.

Each transceiver 40 is configured to receive data packets from the forwarding logic 33 and to transmit the data packets across a respective subscriber line 27 to the CP transceiver 24 (FIG. 1) at the other end of the subscriber line 27. Each transceiver 40 is also configured to receive data packets from the CP transceiver 24 via the subscriber line 27 and to transmit the data packets to the forwarding logic 33 for transmission to the network communication device 18 (FIG. 1) via the network connection 21, The NAD 15 further comprises a power management unit 45 coupled to the subscriber lines 27, the transceivers 30 and 40, the forwarding logic 33, and various other components (not shown) of the NAD 15. The power management unit 45 is configured to receive electrical energy from the CP transceivers 24 via the subscriber lines 27 and to combine the electrical energy from a plurality of subscriber lines 27 into a power signal used to power various components of the NAD 15, such as, for example, the transceivers 30 and 40 and the forwarding logic 33. In one embodiment, the power management unit 45 powers the components via a power bus 47. By powering the components of the NAD 15 with power from the CP transceivers 24, it is unnecessary to maintain other types of power sources, such as batteries, for powering the NAD 15.

For each subscriber line 27, the power management unit 45 is further configured to sense a parameter indicative of the amount of power received from the CP transceiver coupled to the subscriber line 27 and to compare the sensed parameter to a threshold. Based on such comparison, the power management unit 45 selectively enables and disables the transceiver 40 coupled to such subscriber line 27. In one embodiment, the power management unit 45 is coupled to each transceiver 40 via a respective control connection 49 across which the unit 45 selectively enables and disables the transceiver 40. For example, if the power management unit 45 determines that the sensed parameter for a subscriber line 27 is below the threshold, the power management unit 45 disables the transceiver 40 that is coupled to such line 27, and the corresponding CP transceiver 24 at the other end of the line 27 is therefore prevented from communicating with the NAD 15. However, if the power management unit 45 determines that the sensed parameter for a subscriber line 27 is above the threshold, the power management unit 45 enables the transceiver 40 that is coupled to such line 27, and the corresponding CP transceiver 24 at the other end of the line 27 is therefore allowed to communicate with the NAD 15. Accordingly, each CP transceiver 24 must provide a certain amount of power to the NAD 15 in order to receive communication service.

When any transceiver 40 is disabled from communicating across the subscriber line 27 coupled to it, the transceiver 40 transitions to a powered down state in which it consumes less power than when the transceiver 40 is enabled. Thus, by selectively enabling the transceivers 40, as described above, the NAD 15 consumes less power. As an example, if one of the CP transceivers 40 becomes inactive or disconnected from its respective subscriber line 27 or if the subscriber line 27 is severed such that the NAD 15 stops receiving power from the CP transceiver 40, then the transceiver 40 coupled to such subscriber line 27 is transitioned to a powered down state thereby reducing the overall power requirements of the NAD 15. Exemplary communication techniques for an NAD 15 and exemplary techniques for powering an NAD 15 are described in U.S. Patent Application US2010083403 entitled "Systems and Methods for Powering a Service Unit," and filed on July 19, 2010.

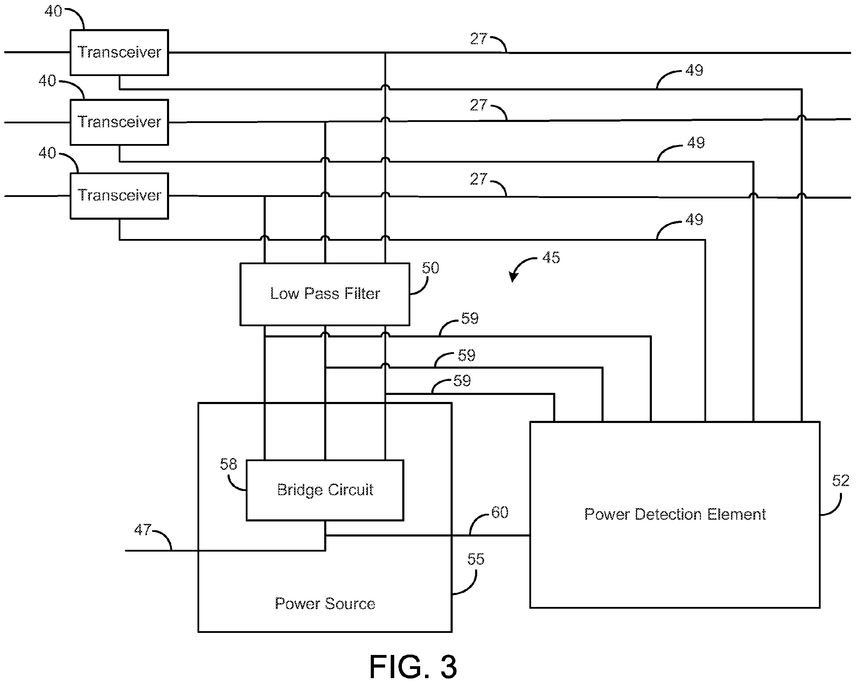

FIG. 3 depicts an exemplary embodiment of the power management unit 45 of FIG. 2. The power management unit 45 comprises a low pass filter 50, a power detection element 52, and a power source 55. The low pass filter 50 is coupled to the subscriber lines 27, and for each subscriber line 27, the low pass filter 50 is configured to filter the signals carried by such subscriber line 27 in order to separate the power signal from the data signals, which are at a higher frequency in one exemplary embodiment than the power signal. In particular, the low pass filter 50 prevents the data signals from passing such that only the power signal from the CP transceiver 24 at the other end of the line 27 is received by the power detection element 52 and the power source 55, when such power signal is available. Each received power signal is transmitted from the low pass filter 50 to the power source 55 and the power detection element 52.

The power source 55 is coupled to the low pass filter 50 and to various components of the NAD 15 via the power bus 47. The power source 55 is configured to provide at least one power signal derived from the electrical power received from the subscriber lines 27 in order to power various components of the NAD 15, such as the transceivers 40, the forwarding logic 33, and/or the transceiver 30. The power source 55 has circuitry which combines the power signals from multiple subscriber lines 27 into a single power signal in order to deliver power across the bus 47 to the components of the NAD 15, though the power source 55 can provide multiple power signals to the components of the NAD 15 in other embodiments. In one embodiment, the power source 55 comprises a bridge circuit 58 which sums the power signals from the subscriber lines 27 for use in powering the components of the NAD 15. The bridge circuit 58 produces a combined power signal, which is transmitted to the components of the NAD 15 via the bus 47 and to the power detection element 52, discussed in more detail hereafter. However, other types of circuitry for combining the power signals from the subscriber lines 27 into a form suitable for powering the components of the NAD 15 are possible in other embodiments. By powering the components of the NAD 15 with power from the CP transceivers 24, the need for other types of power sources, such as batteries, can be eliminated.

The power management unit 45 further comprises the power detection element 52, The power detection element 52 is coupled to the low pass filter 50 via input connections 59 and is coupled to the transceivers 40 via the control connections 49. The power detection element 52 is also coupled to the bridge circuit 58 via a bridge connection 60. The power signals from the CP transceivers 24 are transmitted across the subscriber lines 27, through the low pass filter 50, and to the power detection element 52 via the input connections 59. After leaving the low pass filter 50, the power signals are also transmitted to the bridge circuit 58 of the power source 55 and combined into the combined power signal. Each input connection 59 corresponds to a respective subscriber line 27 and transmits the power signal of such line 27 to the power detection element 52. In one embodiment, each input connection 59 comprises a twisted-wire pair, although other types of connections 59 are possible in other embodiments. Also, the combined power signal is transmitted to the power detection element 52 via the bridge connection 60.

For each subscriber line 27, the power detection element 52 is configured to sense a parameter indicative of the power level of the filtered power signal received from the subscriber line 27 and to then selectively enable and disable the transceiver 40 coupled to such line 27 based upon the parameter. In one embodiment, the power detection element 52 determines whether the parameter indicates that the power is above a certain amount. For example, the power detection element 52 may receive the filtered power signal from a given subscriber line 27 and compare a parameter of the filtered power signal to a threshold stored in power detection logic (not shown in FIG. 3), described in more detail hereafter.

If the parameter is below the threshold indicating a relatively low amount of power, the power detection element 52 disables the corresponding transceiver 40 that is coupled to the subscriber line 27 from which the power signal was received. In this regard, the power detection element 52 transmits a control signal via the control connection 49 coupled to the corresponding transceiver 40 such that it is disabled from communicating across the subscriber line 27 and transitions into a powered down state. If the sensed parameter later rises above the threshold indicating a relatively high amount of power, then the element 52 enables the corresponding transceiver 40 via the foregoing control signal such that the transceiver 40 awakens and provides communication service across the subscriber line 27 coupled to it.

Accordingly, the power source 55 provides a power signal for powering components of the NAD 15 based on electrical power transmitted to the NAD 15 across the subscriber lines 27, and the power detection element 52 selectively enables and disables the transceivers 40 based on which CP transceivers 24 are providing power above an amount established by the threshold. Thus, communication service is only provided to CP transceivers 24 that are currently providing power to the NAD 15.

Note that there are various types of thresholds and techniques for determining thresholds that may be used for the threshold described above. For example, the threshold may be based on the voltage of the combined power signal received via the bridge connection 60. In one exemplary embodiment, the threshold is defined as a predefined percentage of or within a predefined range of the voltage of the combined power signal received via the bridge connection 60. As an example, the threshold may be defined to be the voltage of the combined power signal received via the bridge connection 60 plus the expected voltage drop across the bridge circuit 58 such that the threshold is about equal to the expected input voltage of the bridge circuit 58. As an example, if the expected voltage drop across the bridge circuit 58 is equal to two diode voltage drops, where V_{diode}, is the voltage drop across one diode and V_{combined} is the measured voltage of the combined power signal received from the bridge connection 60, then the threshold (TH) may defined according to the equation: TH = V_{combined} + 2V_{diode}. In such example, the power detection element 52 compares the voltage of the filtered power signal from a given subscriber line 27 to a voltage threshold that is based on the combined power signal from the bridge connection 60. If the voltage of the filtered power signal from the subscriber line 27 is below such threshold, the power detection element 52 determines that the CP transceiver 24 (FIG. 1) coupled to the subscriber line 27 is not contributing an adequate amount of power and, therefore, disables the transceiver 40 servicing such CP transceiver 24. Other thresholds and parameters indicative of the power are possible in other embodiments. As a mere example, a predefined threshold may be stored in memory and then accessed at runtime for performing the comparisons. Further, as will be described in more detail hereafter, current measurements may be used to indicate the power received from the subscriber lines 27.

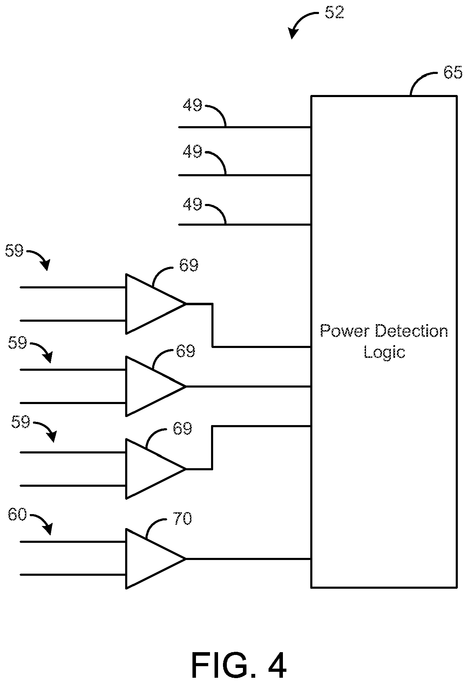

FIG. 4 depicts an exemplary embodiment of the power detection element 52 of FIG. 3. In one embodiment, the power detection element 52 comprises power detection logic 65 and one or more voltage sensors 69 and 70. Each voltage sensor 69 is coupled between a respective one of the input connections 59 and the power detection logic 65, and the voltage sensor 70 is coupled between the bridge connection 60 and the power detection logic 65. In one exemplary embodiment, each input connection 59 and the bridge connection 60 comprise twisted-wire pairs, although other types of connections 59 and 60 are possible in other embodiments. Each voltage sensor 69 is configured to sense a voltage (*e.g.,* the voltage difference between the two wires of the twisted-wire pair) of the respective input connection 59 coupled to it, and such voltage is indicative of the power level of the power signal carried by the subscriber line 27 (referred to as the "corresponding subscriber line") that is coupled to the sensor 69 through the filter 50. In particular, the voltage is indicative of the voltage difference between tip and ring of the subscriber line 27, thereby indicating the power level of the power signal carried by the subscriber line 27. Similarly, the voltage sensor 70 is configured to sense a voltage difference of the bridge connection 60, and the power detection logic 65 is configured to use the voltage sensed by the sensor 70 to define a threshold for comparing to the voltages sensed by the sensors 69. In one embodiment, a voltage comparator is used to implement each sensor 69 and 70, and the output signal of a given sensor 69 and 70 has a voltage that is proportional to the voltage difference of the sensor's input connections. Other types of voltage sensors 69 and 70 are possible in other embodiments.

For each voltage sensor 69, the power detection logic 65 is configured to receive the output signal indicative of the sensed voltage and to compare the sensed voltage to the threshold determined by the power detection logic 65. In one embodiment, discussed in more detail hereafter, the power detection logic 65 is implemented in software, and the threshold is stored in memory (not shown in FIG. 4) of the power detection element 52. In one embodiment, as described above, the threshold is based on the sensed voltage on the bridge connection 60. If the sensed voltage on a given input connection 59 exceeds the threshold, the logic 65 determines that a sufficient amount of power is being received from the corresponding subscriber line 27. In such case, the logic 65 communicates with the transceiver 40 (FIG. 3), referred to as the "corresponding transceiver 40," that is coupled to the corresponding subscriber line 27 and enables such transceiver 40, thereby providing communication service to a CP transceiver 24 via the corresponding subscriber line 27. However, if the sensed voltage does not exceed the threshold, the logic 65 determines that sufficient power is not being received from the corresponding subscriber line 27 and the logic 65 communicates with the corresponding transceiver 40 via a connection 49 such that the transceiver 40 is disabled. Thus, communication service is not provided to the CP transceiver 24 via the corresponding subscriber line 27 when the threshold is not exceeded. Accordingly, the power detection logic 65 ensures that communication service is only provided to the CP transceiver 24 if the CP transceiver 24 is currently providing a sufficient amount of power to the NAD 15 (FIG. 1) via the subscriber line 27. Any transceivers 40 coupled to subscriber lines 27 not currently providing a sufficient amount of power to the NAD 15 are disabled and, therefore, transition to a powered down state.

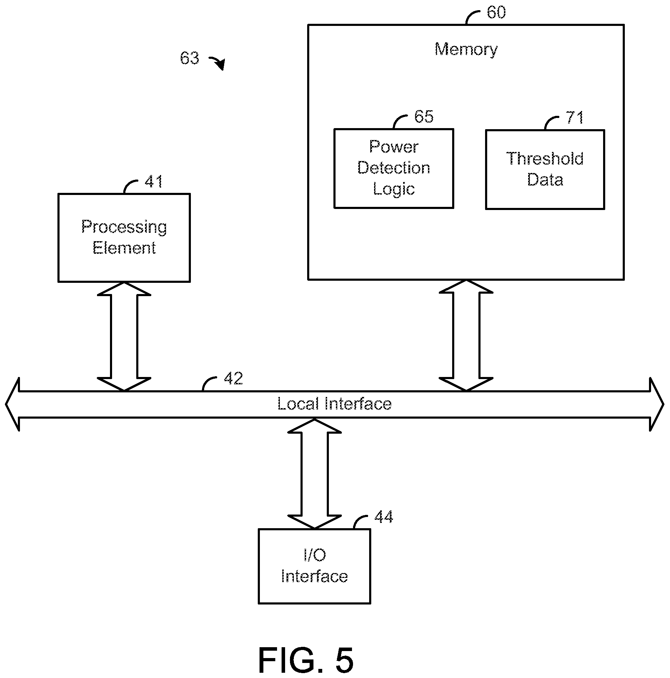

Note that the power detection logic 65 may be implemented in hardware, software, firmware, or any combination thereof. In one exemplary embodiment, the power detection logic 65 is implemented in software within an instruction execution apparatus, such as a digital signal processor (DSP), FIG. 5 depicts an exemplary embodiment of an instruction execution apparatus 63 for executing instructions of the power detection logic 65 when such logic 65 is implemented in software and stored within memory 60.

The instruction execution apparatus 63 of FIG. 5 comprises at least one conventional processing element 41, such as a central processing unit (CPU), that communicates to and drives the other elements within the apparatus 63 via a local interface 42. Furthermore, the instruction execution apparatus 63 comprises an input/output (I/O) interface 44, for example, one or more I/O pins, which can be used to input and output various data to and from the instruction execution apparatus 63. As an example, in one embodiment, the I/O interface 44 is coupled to the voltage sensors 69 and the connections 49 depicted by FIG. 4.

Note that the power detection logic 65, when implemented in software, can be stored and transported on any computer-readable medium for use by or in connection with an instruction execution apparatus that can fetch and execute instructions. In the context of this document, a "computer-readable medium" can be any means that can contain or store a computer program for use by or in connection with an instruction execution apparatus.

In one embodiment, the instruction execution apparatus 63 further comprises threshold data 71 stored in the memory 60. The threshold data 71 indicates the threshold against which the sensed voltages are compared. The power detection logic 65 accesses the threshold data 71 in order to compare the sensed voltages to the threshold and determine whether each CP transceiver 24 is providing a sufficient amount power to the NAD 15. For example, when the power detection logic 65 receives a signal from the voltage sensor 69 indicating the sensed voltage on the corresponding subscriber line 27, the logic 65 accesses the threshold data 71 and compares the sensed voltage to the threshold. If the sensed voltage exceeds the threshold, the logic 65 enables the corresponding transceiver 40 coupled to the subscriber line 27 such that communication service is provided to the CP transceiver 24 coupled to the other end of the subscriber line 27. However, if the sensed voltage does not exceed the threshold, the logic 65 disables the transceiver 40 such that communication service is not provided to the CP transceiver 24 via the subscriber line 27 until the CP transceiver 24 provides a sufficient amount of power to the NAD 15.

In one exemplary embodiment, assume that the NAD 15 is located at an intermediate point between the network facility 20 and the customer premises 25 in an outside plant environment. Also assume that the NAD 15 comprises a plurality of transceivers 40, and each transceiver 40 is coupled to a respective CP transceiver 24 via a respective subscriber line 27. Also assume that each transceiver 40 is enabled such that communication service is provided to the CP transceivers 24 via all of the subscriber lines 27, and assume that each CP transceiver 24 is providing power to the NAD 15 via its respective subscriber line 27. Further assume that each subscriber line 27 and each input connection 59 comprises a twisted-wire pair.

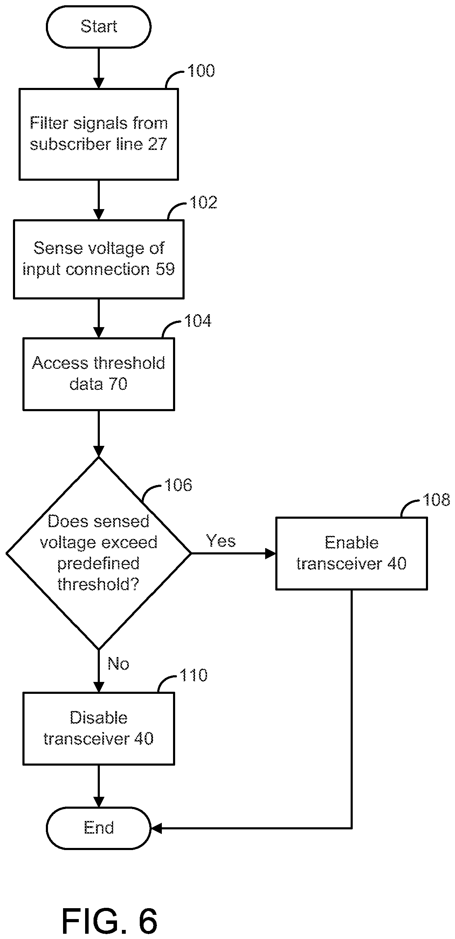

Each CP transceiver 24 simultaneously transmits a data signal and a power signal to the NAD 15 via its respective subscriber line 27. For a given subscriber line 27 (referred to as the "particular subscriber line" for this example), the data and power signals carried by the particular subscriber line 27 are received by the power management unit 45 and the transceiver 40 that is coupled to such line 27. The low pass filter 50 of the power management unit 45 filters the electrical signal from the particular subscriber line 27 to remove the data signal, as shown by block 100 of FIG. 6. That is the low pass filter 50 prevents the data signal from passing but permits the power signal to pass. The power signal is received by the power source 55, and the bridge circuit 58 in the power source 55 combines the power signal with the power signals from other subscriber lines 27 to provide a combined power signal. The power source 55 transmits the combined power signal to the components of the NAD 15, such as the transceivers 30 and 40, via the power bus 47 in order to power the components of the NAD 15.

After passing through the low pass filter 50, the power signal is also transmitted to the power detection element 52 via an input connection 59. A voltage sensor 69 senses the voltage of the power signal from the input connection 59, as shown by block 102. The voltage sensor 69 then sends an output signal indicative of the sensed voltage to the power detection logic 65. The power detection logic 65 accesses the threshold data 71 stored in the memory 60 of the power detection element 52, as shown by block 104, and compares the sensed voltage to a threshold, as shown by block 106. Assuming that the CP transceiver 24 is providing sufficient power to the NAD 15 such that the sensed voltage exceeds the threshold, the power detection logic 65 transmits a signal to the transceiver 40 via the control connection 49 such that the transceiver 40 is enabled, as shown by block 108. Accordingly, the NAD 15 continues to provide communication service to the CP transceiver 24 coupled to the particular subscriber line 27.

Now assume that such CP transceiver 24 stops providing power to the NAD 15. The CP transceiver 24 transmits the data signal to the transceiver 40 and to the power management unit 45 of the NAD 15 via the particular subscriber line 27. The low pass filter 50 prevents the data signal from passing. In such case, the voltage sensed by the voltage sensor 69 falls below the threshold, and the power detection logic 65 transmits a signal to the transceiver 40 via the control connection 49 such that the transceiver 40 coupled to the particular subscriber line 27 is disabled, as shown by block 110 and, therefore, transitions to a powered down state. Thus, communication service is no longer provided by the NAD 15 to the CP transceiver 24 that is coupled to the particular subscriber line 27.

If such CP transceiver 24 resumes providing a sufficient power signal to the NAD 15 via the particular subscriber line 27, the sensed voltage should rise above the threshold again. Once this occurs, the power detection logic 65 enables the transceiver 40 coupled to the particular subscriber line 27. In response, the transceiver 40 powers up, and communication service will once again be provided to the CP transceiver 24 via the particular subscriber line 27.

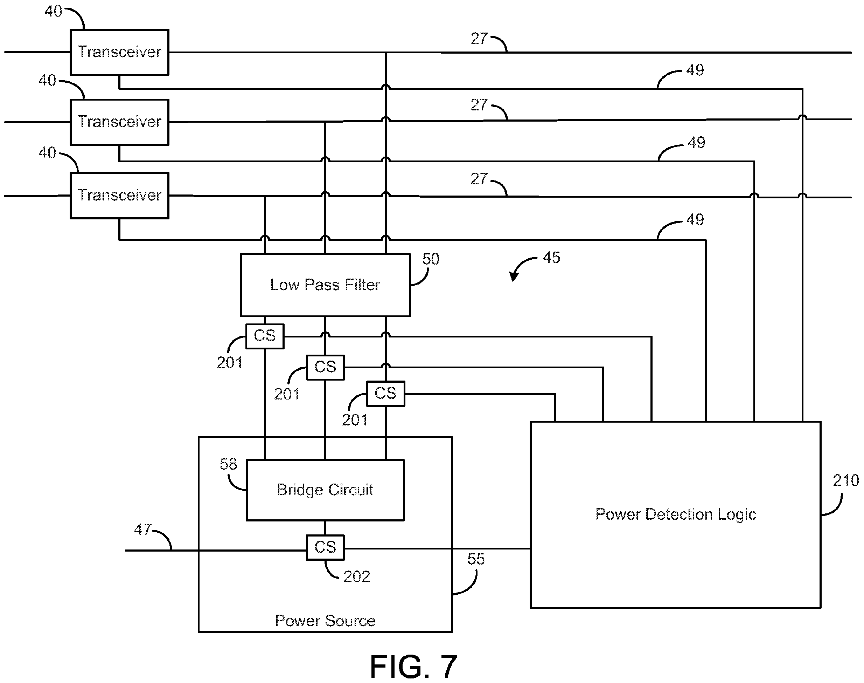

It should be noted that the embodiments described above are exemplary, and various changes and modifications can be made to the described embodiments. As an example, FIG. 7 depicts an exemplary embodiment in which in-line current sensors 201 are used to measure the current from each subscriber line 27, which is indicative of the power provided by each subscriber line 27. Each current sensor 201 measures the current transmitted from a respective subscriber line 27 and transmits a value indicative of the measured current to power detection logic 210, which compares the value to a threshold. If the measured current is less than the threshold, then the power detection logic 210 is configured to determine that the subscriber line 27 coupled to the current sensor 210 is not providing adequate power and to then power down the transceiver 40 coupled to such subscriber line 27. If the measured current exceeds the threshold, the power detection logic 210 does not power down the transceiver 40.

In one exemplary embodiment, the threshold is based on the current of the combined power signal transmitted across the power bus 47. In this regard, a current sensor 202 measures such current and transmits a value indicative of the measured current to the power detection logic 210. The power detection logic 210 then establishes, based on such value, the threshold for comparing the current measurements from the sensors 201. As an example, the power detection may establish the threshold to be slightly below about I_{combined}/n, where n is the total number of subscriber lines 27 and I_{combined} is the current measured by the sensor 202. In other embodiments, other thresholds and techniques may be used.

## Claims

1. A communication system (10) having customer premises, CP, transceivers (24) and a network access device, NAD, (15), the CP transceivers (24) located at one or more customer premises (25) and coupled to a plurality of subscriber lines (27), the NAD (15) coupled to the subscriber lines (27) and positioned at an intermediate point between the CP transceivers (24) and a network facility (20), the NAD (15) comprising a plurality of NAD transceivers (40) configured to transmit and receive data signals via the subscriber lines (27), each of the NAD transceivers (40) coupled to a respective one of the CP transceivers (24) via a respective one of the subscriber lines (27), the NAD (15) further comprising;
a low pass filter (50) configured to filter power signals transmitted from the CP transceivers (24) across the subscriber lines (27) to permit filtered power signals to pass;
a power source (55) configured to receive filtered power signals transmitted from the low pass filter (50), the power source (55) further configured to combine the filtered power signals, thereby forming a combined power signal (47), and to power components of the NAD (15) via the combined power signal (47); and
a power detection element (52) configured to sense a parameter indicative of a power level for one of the filtered power signals, the power detection element (52) further configured to compare the parameter to a threshold and to determine whether to enable or disable one of the plurality of NAD transceivers (40) based on a comparison of the parameter to the threshold.

2. The system of claim 1, wherein the one of the plurality of NAD transceivers is coupled to one of the subscriber lines that carries the one of the power signals received by the power source.

3. The system of claim 1, wherein the parameter is a voltage of the one of the power signals.

4. The system of claim 3, wherein the power detection element is configured to determine the threshold based on the combined power signal.

5. A method for use in a communication system that communicates data signals across subscriber lines (27) between customer premises, CP, transceivers (24) at one or more customer premises and network access device, NAD, transceivers (40) of a NAD (15) at an intermediate point between the CP transceivers (24) and a network facility (20), each of the NAD transceivers (40) coupled to a respective one of the CP transceivers (24) by a respective one of the subscriber lines (27), the method comprising:
receiving at the NAD (15) power signals transmitted from the CP transceivers (24) across the subscriber lines (27);
using a low pass filter, filtering the received power signals transmitted from the CP transceivers (24) across the subscriber lines (27) to permit filtered power signals to pass;
combining the filtered power signals at the NAD (15), thereby forming a combined power signal (47);
powering components of the NAD (15) via the combined power signal (47);
sensing a parameter indicative of a power level for one of the filtered power signals;
comparing the parameter to a threshold; and
determining whether to enable or disable one of the NAD transceivers (40) based on the comparing.

6. The method of claim 5, wherein the one of the NAD transceivers is coupled to one of the subscriber lines that carries the one of the received power signals.

7. The method of claim 5, wherein the parameter is a voltage of one of the received power signals.

8. The method of claim 7, further comprising determining the threshold based on the combined power signal.

## Patentansprüche

1. Kommunikationssystem (10), welches Kundenstandorte, CP, Sendeempfänger (24) und eine Netzwerkzugriffsvorrichtung, NAD, (15) aufweist, wobei sich die CP-Sendeempfänger (24) an einem oder mehreren Kundenstandorten (25) befinden und mit einer Vielzahl an Teilnehmerleitungen (27) verbunden sind, wobei die NAD (15) mit den Teilnehmerleitungen (27) verbunden ist und an einem Zwischenpunkt zwischen den CP-Sendeempfängern (24) und einer Netzwerkeinrichtung (20) angeordnet ist, wobei die NAD (15) eine Vielzahl an NAD-Sendeempfängern (40) aufweist, die zum Senden und Empfangen von Datensignalen über die Teilnehmerleitungen (27) ausgestaltet sind, wobei jeder der NAD-Sendeempfänger (40) über eine jeweilige der Teilnehmerleitungen (27) mit einem jeweiligen der CP-Sendeempfänger (24) verbunden ist, wobei die NAD (15) ferner aufweist,
einen Tiefpassfilter (50), der ausgestaltet ist, um Leistungssignale zu filtern, die von den CP-Sendeempfängern (24) über die Teilnehmerleitungen (27) übertragen werden, um das Durchlassen von gefilterten Leistungssignalen zu ermöglichen,
eine Energiequelle (55), die ausgestaltet ist, um gefilterte Leistungssignale zu empfangen, die von dem Tiefpassfilter (50) gesendet werden, wobei die Energiequelle (55) ferner ausgestaltet ist, um die gefilterten Leistungssignale zu kombinieren, wodurch ein kombiniertes Leistungssignal (4, 7) gebildet wird, und um die Komponenten der NAD (15) über das kombinierte Leistungssignal (47) mit Energie zu versorgen, und
ein Leistungserfassungselement (52), das ausgestaltet ist, um einen Parameter zu erfassen, der einen Leistungspegel für eines der gefilterten Leistungssignale anzeigt, wobei das Leistungserfassungselement (52) ferner ausgestaltet ist, um den Parameter mit einem Schwellenwert zu vergleichen und zu bestimmen, ob einer von der Vielzahl der NAD-Sendeempfänger (40) basierend auf einem Vergleich des Parameters mit dem Schwellenwert aktiviert oder deaktiviert werden soll.

2. System nach Anspruch 1, wobei der eine von der Vielzahl der NAD-Sendeempfänger mit einer der Teilnehmerleitungen verbunden ist, die das eine der von der Energiequelle empfangenen Leistungssignale überträgt.

3. System nach Anspruch 1, wobei der Parameter eine Spannung des einen der Leistungssignale ist.

4. System nach Anspruch 3, wobei das Leistungserfassungselement ausgestaltet ist, um den Schwellenwert basierend auf dem kombinierten Leistungssignal zu bestimmen.

5. Verfahren zur Verwendung in einem Kommunikationssystem, welches Datensignale über Teilnehmerleitungen (27) zwischen Kundenstandorten, CP, Sendeempfängern (24) an einem oder mehreren Kundenstandorten und einer Netzwerkzugangsvorrichtung, NAD, Sendeempfängern (40) eines NAD (15) an einem Zwischenpunkt zwischen den CP-Sendeempfängern (24) und einer Netzwerkeinrichtung (20) kommuniziert, wobei jeder der NAD-Sendeempfänger (40) über eine jeweilige der Teilnehmerleitungen (27) mit einem jeweiligen der CP-Sendeempfänger (24) verbunden ist, wobei das Verfahren umfasst:
ein Empfangen von Leistungssignalen, die von den CP-Sendeempfängern (24) über die Teilnehmerleitungen (27) an die NAD (15) gesendet werden,
ein Filtern der empfangenen Leistungssignale, die von den CP-Sendeempfängern (24) über die Teilnehmerleitungen (27) gesendet werden, unter Verwendung eines Tiefpassfilters, um zuzulassen, dass gefilterte Leistungssignale durchgelassen werden,
ein Kombinieren der gefilterten Leistungssignale an die NAD (15), wodurch ein kombiniertes Leistungssignal (47) gebildet wird,
ein Versorgen von Komponenten der NAD (15) über das kombinierte Leistungssignal (47) mit Energie,
ein Erfassen eines Parameters, der einen Leistungspegel für eines der gefilterten Leistungssignale anzeigt,
ein Vergleichen des Parameters mit einem Schwellenwert, und
ein Bestimmen, ob einer der NAD-Sendeempfänger (40) basierend auf dem Vergleichen aktiviert oder deaktiviert werden soll.

6. Verfahren nach Anspruch 5, wobei der eine der NAD-Sendeempfänger mit einer der Teilnehmerleitungen verbunden ist, die das eine der empfangenen Leistungssignale führt.

7. Verfahren nach Anspruch 5, wobei der Parameter eine Spannung eines der empfangenen Leistungssignale ist.

8. Verfahren nach Anspruch 7, welches ferner das Bestimmen des Schwellenwerts basierend auf dem kombinierten Leistungssignal umfasst.

## Revendications

1. Système de communication (10), comprenant des émetteurs-récepteurs de locaux de client, CP (24) et un dispositif d'accès au réseau, NAD (15), les émetteurs-récepteurs CP (24) étant situés dans un ou plusieurs des locaux de client (25) et étant couplés à une pluralité de lignes d'abonné (27), le NAD (15) étant couplé aux lignes d'abonné (27) et positionnés à un point intermédiaire entre les émetteurs-récepteurs CP (24) et une installation de réseau (20), le NAD (15) comprenant une pluralité d'émetteurs-récepteurs de NAD (40) configurés de manière à transmettre et à recevoir des données par l'intermédiaire des lignes d'abonné (27), chacun des émetteurs-récepteurs de NAD (40) étant couplé à un émetteur-récepteur CP (24) respectif par l'intermédiaire d'une ligne d'abonné (27) respective, le NAD (15) comprenant en outre :
- un filtre passe-bas (50) configuré de manière à filtrer des signaux d'alimentation émis par les émetteurs-récepteurs CP (24) à travers les lignes d'abonné (27) afin de permettre aux signaux d'alimentation filtrés de passer ;
- une source de puissance (55) configurée de manière à recevoir des signaux d'alimentation filtrés transmis par le filtre passe-bas (50), la source de puissance (55) étant en outre configurée de manière à combiner les signaux d'alimentation filtrés, formant de ce fait un signal d'alimentation combiné (47), et à alimenter des composants du NAD (15) par l'intermédiaire du signal d'alimentation combiné (47) ; et
- un élément de détection de puissance (52) configuré de manière à détecter un paramètre indicatif d'un niveau de puissance pour l'un des signaux d'alimentation filtrés, l'élément de détection de puissance (52) étant en outre configuré de manière à comparer le paramètre avec un seuil et à déterminer s'il faut activer ou désactiver un parmi la pluralité d'émetteurs-récepteurs de NAD (40) sur la base de la comparaison du paramètre avec le seuil.

2. Système selon la revendication 1, dans lequel ledit un parmi la pluralité d'émetteurs-récepteurs de NAD est couplé à l'une des lignes d'abonné qui porte ledit un des signaux d'alimentation reçus par la source de puissance.

3. Système selon la revendication 1, dans lequel le paramètre est une tension de l'un des signaux d'alimentation.

4. Système selon la revendication 3, dans lequel l'élément de détection de puissance est configuré de manière à déterminer le seuil sur la base du signal d'alimentation combiné.

5. Procédé à utiliser dans un système de communication qui communique des signaux de données à travers des lignes d'abonné (27) entre des émetteurs-récepteurs de locaux de client, CP (24) dans un ou plusieurs des locaux de client et des émetteurs-récepteurs de dispositif d'accès au réseau, NAD (40) d'un NAD (15) à un point intermédiaire entre les émetteurs-récepteurs CP (24) et une installation de réseau (20), chacun des émetteurs-récepteurs de NAD (40) étant couplé à un émetteur-récepteur CP (24) respectif par l'intermédiaire d'une ligne d'abonné (27) respective, le procédé comprenant les étapes suivantes :
- réception au niveau du NAD (15) des signaux d'alimentation transmis par les émetteurs-récepteurs CP (24) à travers les lignes d'abonné ;
- utilisation d'un filtre passe-bas, filtrer les signaux d'alimentation reçus transmis par les émetteurs-récepteurs CP (24) à travers les lignes d'abonné (27) afin de permettre aux signaux d'alimentation filtrés de passer ;
- combinaison des signaux d'alimentation filtrés au NAD (15), formant de ce fait un signal d'alimentation combiné (47) ;
- alimentation des composants du NAD (15) par l'intermédiaire du signal d'alimentation combiné (47) ;
- détection d'un paramètre indicatif d'un niveau de puissance pour l'un des signaux d'alimentation filtrés ;
- comparaison du paramètre avec un seuil ; et
- détermination s'il faut activer ou désactiver l'un des émetteurs-récepteurs de NAD (40) sur la base de la comparaison.

6. Procédé selon la revendication 5, dans lequel ledit un parmi la pluralité d'émetteurs-récepteurs de NAD est couplé à l'une des lignes d'abonné qui porte ledit un des signaux d'alimentation reçus.

7. Procédé selon la revendication 5, dans lequel le paramètre est une tension de l'un des signaux d'alimentation reçus.

8. Procédé selon la revendication 7, comprenant en outre la détermination du seuil sur la base du signal d'alimentation combiné.
